(19) Europäisches Patentamt
European Patent Office
Office européen des brevets

(11) **EP 4 507 296 A1**

(12) **EUROPEAN PATENT APPLICATION**
published in accordance with Art. 153(4) EPC

(43) Date of publication:
**12.02.2025 Bulletin 2025/07**

(21) Application number: **23878630.5**

(22) Date of filing: **25.05.2023**

(51) International Patent Classification (IPC):
**H04N 19/11** (2014.01)     **H04N 19/105** (2014.01)

(52) Cooperative Patent Classification (CPC):
**H04N 19/105; H04N 19/11; H04N 19/13;**
**H04N 19/159; H04N 19/52**

(86) International application number:
**PCT/CN2023/096359**

(87) International publication number:
**WO 2024/082632 (25.04.2024 Gazette 2024/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.10.2022 CN 202211296332**

(71) Applicant: **Tencent Technology (Shenzhen)**
**Company Limited**
**Shenzhen, Guangdong 518057 (CN)**

(72) Inventors:
• **KUANG, Wei**
  **Shenzhen, Guangdong 518057 (CN)**
• **ZHANG, Han**
  **Shenzhen, Guangdong 518057 (CN)**
• **ZHANG, Hongbin**
  **Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **VIDEO CODING METHOD AND APPARATUS, VIDEO DECODING METHOD AND APPARATUS, AND COMPUTER-READABLE MEDIUM AND ELECTRONIC DEVICE**

(57)     Provided in the embodiments of the present application are a video coding method and apparatus, a video decoding method and apparatus, and a computer-readable medium and an electronic device. The video coding method and the video decoding method relate to the technical field of video coding and decoding in the technical field of coding and decoding. The video decoding method comprises: decoding a video code stream to obtain correction value indication information of when template based intra mode derivation (TIMD) is used; acquiring a candidate prediction mode of the current block, which mode is obtained on the basis of the TIMD; correcting the candidate prediction mode by means of a correction value, which is indicated by the correction value indication information, so as to obtain a corrected TIMD prediction mode; and decoding the current block on the basis of the corrected TIMD prediction mode. By means of the technical solution in the embodiments of the present application, the accuracy and adaptive capability of TIMD can be improved by means of introducing a correction value, such that the video coding and decoding performance can be improved.

```
Decode a video bitstream to obtain correction value          S510
indication information used when TIMD is used

              ↓

Obtain a candidate prediction mode of a current             S520
block obtained through TIMD

              ↓

Correct the candidate prediction mode with a                S530
correction value indicated by the correction value
indication information, to obtain a corrected TIMD
prediction mode

              ↓

Decode the current block based on the corrected             S540
TIMD prediction mode
```

FIG. 5

# Description

## RELATED APPLICATION

This application claims priority to Chinese Patent Application No. 202211296332.X, filed with the China National Intellectual Property Administration on October 21, 2022 and entitled "VIDEO CODING AND DECODING METHODS AND APPARATUSES, COMPUTER-READABLE MEDIUM, AND ELECTRONIC DEVICE", which is incorporated herein by reference in its entirety.

## FIELD OF THE TECHNOLOGY

This application relates to the field of video coding and decoding technologies in the field of coding and decoding technologies, and specifically, to video coding and decoding methods and apparatuses, a computer-readable medium, and an electronic device.

## BACKGROUND OF THE DISCLOSURE

Template based intra mode derivation (TIMD) is introduced into an enhanced compression model (ECM) standard. Like decoder-side intra mode derivation (DIMD), TIMD may perform a same operation on template regions at a coder side and a decoder side to derive a prediction mode, and reconstruct a current coding unit (CU) based on the derived prediction mode. Because TIMD does not need a coding prediction mode, this technology can reduce a size of a bitstream.

It is assumed in TIMD that a texture feature of the template region is consistent with that of a current to-be-predicted region. However, in actual coding, the texture feature of the template region cannot completely represent that of the current region. Therefore, the prediction mode derived for the template region is not necessarily suitable for the current CU. As a result, video coding and decoding performance is affected.

## SUMMARY

Embodiments of this application provide video coding and decoding methods and apparatuses, a computer-readable medium, and an electronic device. A correction value may be introduced to improve accuracy and adaptability of TIMD, to improve video coding and decoding performance.

Other features and advantages of this application become significant through the following detailed descriptions or partially learned through the practice of this application.

According to an aspect of the embodiments of this application, a video decoding method is provided, including: decoding a video bitstream to obtain correction value indication information used when TIMD is used; obtaining a candidate prediction mode of a current block obtained through TIMD; correcting the candidate prediction mode with a correction value indicated by the correction value indication information, to obtain a corrected TIMD prediction mode; and decoding the current block based on the corrected TIMD prediction mode.

According to an aspect of the embodiments of this application, a video coding method is provided, including: obtaining a candidate prediction mode of a current block obtained through TIMD; determining a correction value for the candidate prediction mode based on rate-distortion optimization (RDO) if the candidate prediction mode of the current block is required to be corrected; generating correction value indication information based on the correction value; and adding the correction value indication information to a video bitstream.

According to an aspect of the embodiments of this application, a video decoding apparatus is provided, including: a decoding unit, configured to decode a video bitstream to obtain correction value indication information used when TIMD is used; an obtaining unit, configured to obtain a candidate prediction mode of a current block obtained through TIMD; a correction unit, configured to correct the candidate prediction mode with a correction value indicated by the correction value indication information, to obtain a corrected TIMD prediction mode; and a processing unit, configured to decode the current block based on the corrected TIMD prediction mode.

According to an aspect of the embodiments of this application, a video coding apparatus is provided, including: an obtaining unit, configured to obtain a candidate prediction mode of a current block obtained through TIMD; a determining unit, configured to determine a correction value for the candidate prediction mode based on RDO if it is determined that the candidate prediction mode of the current block is required to be corrected; a generation unit, configured to generate correction value indication information based on the correction value; and an addition unit, configured to add the correction value indication information to a video bitstream.

According to an aspect of the embodiments of this application, a computer-readable medium is provided, having a computer program stored therein. The computer program, when executed by a processor, implements the video coding method or the video decoding method according to the foregoing embodiments.

According to an aspect of the embodiments of this application, an electronic device is provided, including: one or more processors; and a storage apparatus, configured to store one or more programs. The one or more programs, when executed by the one or more processors, cause the electronic device to implement the video coding method or the video decoding method according to the foregoing embodiments.

According to an aspect of the embodiments of this application, a computer program product is provided. The computer program product includes a computer program. The computer program is stored in a computer-readable storage medium. A processor of an electronic device reads, from the computer-readable storage medium, the computer program, and executes the computer program to cause the electronic device to perform the video coding method or the video decoding method provided in various foregoing embodiments.

According to an aspect of the embodiments of this application, a bitstream is provided. The bitstream is a bitstream involved in the method according to the first aspect described above or a bitstream generated by using the method according to the second aspect described above.

In the technical solutions provided in some embodiments of this application, the video bitstream is decoded to obtain the correction value indication information used when TIMD is used, the candidate prediction mode obtained through TIMD is corrected with the correction value indicated by the correction value indication information, and then the current block is decoded based on the corrected TIMD prediction mode. In this way, the correction value may be introduced to improve accuracy and adaptability of TIMD, to improve video coding and decoding performance.

The foregoing general descriptions and the following detailed descriptions are merely illustrative and explanative, and do not constitute any limitation on this application.

BRIEF DESCRIPTION OF THE DRAWINGS

FIG. 1 is a schematic diagram of an exemplary system architecture to which the technical solutions in the embodiments of this application may be applied.

FIG. 2 is a schematic diagram of a placement mode of a video coding apparatus and a video decoding apparatus in a stream transmission system.

FIG. 3 is a basic flowchart of a video coder.

FIG. 4 is a schematic diagram of positions between a template used in a TIMD technology and a current CU.

FIG. 5 is a flowchart of a video decoding method according to an embodiment of this application.

FIG. 6 is a flowchart of a video coding method according to an embodiment of this application.

FIG. 7 is a schematic diagram of a TIMD angular prediction mode.

FIG. 8 is a block diagram of a video decoding apparatus according to an embodiment of this application.

FIG. 9 is a block diagram of a video coding apparatus according to an embodiment of this application.

FIG. 10 is a schematic diagram of a structure of a computer system of an electronic device suitable for implementing an embodiment of this application.

DESCRIPTION OF EMBODIMENTS

Exemplary implementations will now be described more thoroughly with reference to the accompanying drawings. However, the exemplary implementations may be implemented in various forms, and are not to be understood as being limited to these examples. Instead, these implementations are provided to make this application more thorough and complete, and to fully convey the concept of the exemplary implementations to a person skilled in the art.

In addition, features, structures or characteristics described in this application may be combined in one or more embodiments in any appropriate manner. In the following descriptions, a lot of specific details are provided to give a comprehensive understanding of the embodiments of this application. However, a person skilled in the art is to be aware that when the technical solutions in this application are implemented, not all detail features in the embodiments are needed, and one or more specific details may be omitted, or another method, unit, apparatus, operation, or the like may be used.

The block diagrams shown in the accompanying drawings are merely functional entities and do not necessarily correspond to physically independent entities. That is, the functional entities may be implemented in a software form, in one or more hardware modules or integrated circuits, or in different networks and/or processor apparatuses and/or microcontroller apparatuses.

The flowcharts shown in the accompanying drawings are merely exemplary descriptions, do not need to include all content and operations/blocks, and do not need to be performed in the described orders either. For example, some operations/blocks may be further divided, while some operations/blocks may be combined or partially combined. Therefore, an actual execution order may change based on an actual situation.

"A plurality of" described in this specification means two or more. "And/or" describes an association between associated objects and represents that three relationships may exist. For example, A and/or B may represent three cases: Only A exists, both A and B exist, and only B exists. The character "/" generally indicates an "or" relationship between the associated objects.

The solutions provided in the embodiments of this application may be applied to the field of digital video coding technologies, for example, including but not limited to: the field of picture coding and decoding, the field of video coding and decoding, the field of hardware video coding and decoding, the field of dedicated circuit video coding and decoding, and the field of real-time video coding and decoding. In addition, the solutions provided in the embodiments of this application may be combined to an audio video coding standard (AVS), a second-generation AVS (AVS2), or a third-generation AVS (AVS3), for example, including but not limited to: an H.264/audio video coding (AVC) standard, an H.265/high efficiency video coding (HEVC) standard, and an H.266/versatile video coding (VVC) standard. In addition, the solutions provided in the embodiments of this application may be applied to lossy compression of pictures, and may also be applied to lossless compression of pictures. Lossless compression may be visually lossless compression or mathematically lossless compression.

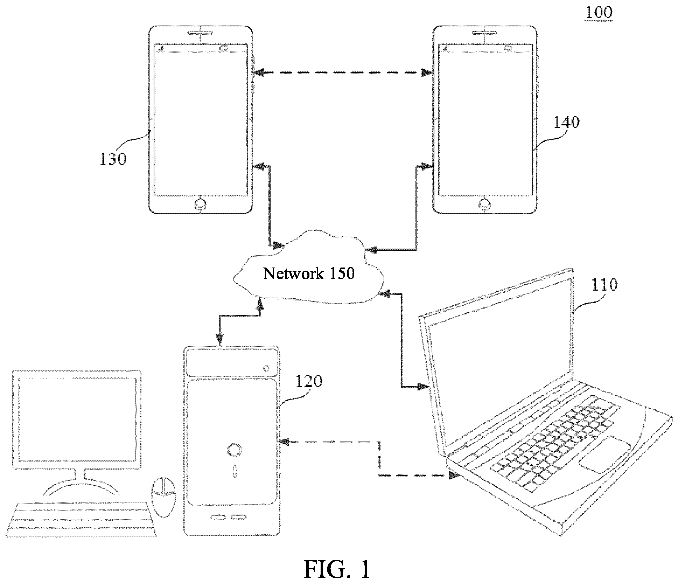

FIG. 1 is a schematic diagram of an exemplary system architecture to which the technical solutions in the embodiments of this application may be applied.

As shown in FIG. 1, a system architecture 100 includes a plurality of terminal apparatuses. The terminal apparatuses may communicate with one another through, for example, a network 150. For example, the system architecture 100 may include a first terminal apparatus 110 and a second terminal apparatus 120 that are connected to each other through the network 150. In the embodiment shown in FIG. 1, the first terminal apparatus 110 and the second terminal apparatus 120 perform unidirectional data transmission.

For example, the first terminal apparatus 110 may code video data (for example, a video picture stream acquired by the terminal apparatus 110) for transmission to the second terminal apparatus 120 through the network 150. The coded video data is transmitted in a form of one or more coded video bitstreams. The second terminal apparatus 120 may receive the coded video data from the network 150, decode the coded video data to recover the video data, and display a video picture based on the recovered video data.

In an embodiment of this application, the system architecture 100 may include a third terminal apparatus 130 and a fourth terminal apparatus 140 that perform bidirectional transmission of coded video data. Bidirectional transmission may occur, for example, during a video conference. For bidirectional data transmission, each of the third terminal apparatus 130 and the fourth terminal apparatus 140 may code the video data (for example, a video picture acquired by the terminal apparatus) for transmission to the other of the third terminal apparatus 130 and the fourth terminal apparatus 140 through the network 150. Each of the third terminal apparatus 130 and the fourth terminal apparatus 140 may further receive coded video data transmitted by the other of the third terminal apparatus 130 and the fourth terminal apparatus 140, and may decode the coded video data to recover the video data, and display a video picture on an accessible display apparatus based on the recovered video data.

In the embodiment shown in FIG. 1, the first terminal apparatus 110, the second terminal apparatus 120, the third terminal apparatus 130, and the fourth terminal apparatus 140 may be servers or terminals. The server may be an independent physical server, a server cluster or distributed system including a plurality of physical servers, or a cloud server providing a basic cloud computing service such as a cloud service, a cloud database, cloud computing, a cloud function, cloud storage, a network service, cloud communication, a middleware service, a domain name service, a security service, a content delivery network (CDN), or a big data and artificial intelligence platform. The terminal may be but is not limited to a smartphone, a tablet computer, a notebook computer, a desktop computer, a smart speaker, a smartwatch, a smart voice interaction device, a smart appliance, an in-vehicle terminal, or an aircraft.

The network 150 represents any number of networks that transmit the coded video data between the first terminal apparatus 110, the second terminal apparatus 120, the third terminal apparatus 130, and the fourth terminal apparatus 140, including, for example, wired and/or wireless communication networks. The communication network 150 may exchange data in a circuit-switched and/or packet-switched channel. The network may include a telecommunication network, a local area network, a wide area network, and/or an internet. For an objective of this application, an architecture and a topology of the network 150 may be insignificant for operations disclosed in this application, unless explained below.

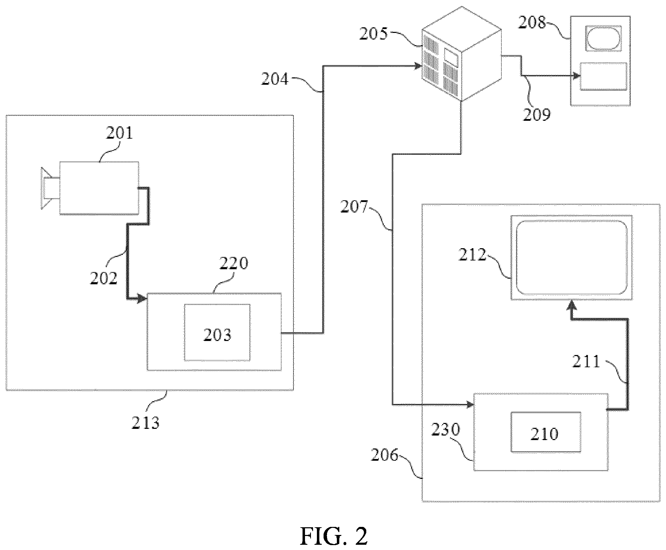

In an embodiment of this application, FIG. 2 shows a placement mode of a video coding apparatus and a video decoding apparatus in a stream transmission environment. The subject disclosed in this application is equivalently applicable to other applications supporting videos, including, for example, a video conference, a digital television (TV), and storage of a compressed video in a digital medium including a compact disc, a digital video disk (DVD), and a memory stick.

A stream transmission system may include an acquisition subsystem 213. The acquisition subsystem 213 may include a video source 201 such as a digital camera. The video source creates an uncompressed video picture stream 202. In this embodiment, the video picture stream 202 includes a sample shot by the digital camera. Compared with coded video data 204 (or a coded video bitstream 204), the video picture stream 202 is shown as a bold line to emphasize a video picture stream with a large data volume. The video picture stream 202 may be processed by an electronic apparatus 220. The electronic apparatus 220 includes a video coding apparatus 203 coupled to the video source 201. The video coding apparatus 203 may include hardware, software, or a combination of software and hardware, to implement or carry out each aspect of the disclosed subject described below in more details. Compared with the video picture stream 202, the coded video data 204 (or the coded video bitstream 204) is shown as a fine line to emphasize the coded video data 204 (or the coded video bitstream 204) with a small data volume, and may be stored in a stream transmission server 205 for later use. One or more stream transmission client subsystems, for example, a client subsystem 206 and a client subsystem 208 shown in FIG. 2, may access the stream transmission server 205 to retrieve a duplicate 207 and a duplicate 209 of the coded video data 204. The client subsystem 206 may include, for example, a video decoding apparatus 210 in an electronic apparatus 230. The video decoding apparatus 210 decodes the input duplicate 207 of the coded video data, and generates an output video picture stream 211 that may be displayed on a display 212 (for example, a display screen) or another display apparatus. In some stream transmission systems, the coded video data 204, the video data 207, and the video data 209 (for example, a video bitstream) may be coded according to some video coding/compression standard.

The electronic apparatus 220 and the electronic apparatus 230 may include other components not shown in this figure. For example, the electronic apparatus 220 may include a video decoding apparatus, and the electronic apparatus 230 may further include a video coding apparatus.

In an embodiment of this application, international video coding standards HEVC and VVC, and a China national video coding standard AVS are used as an example. After a video frame picture is input, the video frame picture may be partitioned into a plurality of nonoverlapping processing units based on a block size, and a similar compression operation is performed on each processing unit. The processing unit is referred to as a coding tree unit (CTU) or a largest coding unit (LCU). The CTU may continue to be further subdivided to obtain one or more basic CUs. The CU is a most basic element in a coding phase.

The following describes some concepts during coding of the CU.

Predictive coding: Predictive coding includes intra prediction, inter prediction, and the like. An original video signal is predicted with a selected reconstructed video signal to obtain a residual video signal. A coder side needs to determine a predictive coding mode to be selected for a current CU, and notify a decoder side. Intra prediction means that a prediction signal is from a coded-reconstructed region in a same picture. Inter prediction means that a prediction signal is from another coded picture (referred to as a reference picture) different from a current picture.

Transform & Quantization: A transform operation such as discrete Fourier transform (DFT) and discrete cosine transform (DCT) is performed on the residual video signal to convert the signal into a transform domain, to obtain a transform coefficient. A lossy quantization operation is further performed on the transform coefficient with specific information lost, so that a quantized signal is favorable for compression and expression.

In some video coding standards, there may be more than one transform mode for selection, so that the coder side also needs to select one transform mode for the current CU, and notify the decoder side. Fineness of quantization is usually determined by a quantization parameter (QP for short). A large value of the QP indicates that coefficients in a larger value range are to be quantized into a same output, which may usually bring a greater distortion and a low code rate. On the contrary, a small value of the QP indicates that coefficients in a small value range are to be quantized into a same output, which may usually bring a small distortion and a high code rate.

Entropy coding or statistical coding: Statistical compressed coding is performed on a quantized transform-domain signal based on a frequency of occurrence of each value, to finally output a binary (0 or 1) compressed bitstream. In addition, entropy coding also needs to be performed on other information generated through coding, for example, a selected coding mode and motion vector data, to reduce the code rate. Statistical coding is a lossless coding mode capable of effectively reducing a code rate required for expressing a same signal. A common statistical coding mode includes variable length coding (VLC for short) or content adaptive binary arithmetic coding (CABAC for short).

A CABAC process mainly includes three operations: binarization, context modeling, and binary arithmetic coding. After binarization processing is performed on an input syntactic element, binary data may be coded in a normal coding mode and a bypass coding mode. In the bypass coding mode, it is unnecessary to assign a specific probabilistic model for each binary bit, and a bin value of the input binary bit is directly coded with a simple bypass coder, to accelerate coding and decoding. Generally, different syntactic elements are not completely independent, and a same syntactic element has memorability to some extent. Therefore, according to a conditional entropy theory, compared with independent coding or memoryless coding, conditional coding with another coded syntactic element can further improve coding performance. Coded sign information used as a condition is referred to as a context. In the normal coding mode, binary bits of the syntactic element enter a context modeler in sequence, and a coder assign an appropriate probabilitic model for each input binary bit based on a value of a previously coded syntactic element or binary bit. This process is context modeling. A context model corresponding to the syntactic element may be located through ctxIdxInc (a context index increment) and ctxIdxStart (a context index start). After the bin value and the assigned probabilistic model are sent to a binary arithmetic coder together for coding, the context model needs to be updated based on the bin value, which is an adaptive process in coding.

Loop filtering: Operations of inverse quantization, inverse transform, and predictive compensation are performed on a transformed and quantized signal to obtain a reconstructed picture. Due to impact of quantization, compared with an original picture, some information of the reconstructed picture is different from that of the original picture, that is, the reconstructed picture may have a distortion. Therefore, a filtering operation may be performed on the reconstructed picture, to effectively reduce a degree of the distortion caused by quantization. Since a filtered reconstructed picture is used as a reference for subsequent picture coding to predict a future picture signal, the filtering operation is also referred to as loop filtering, that is, a filtering operation in a coding loop.

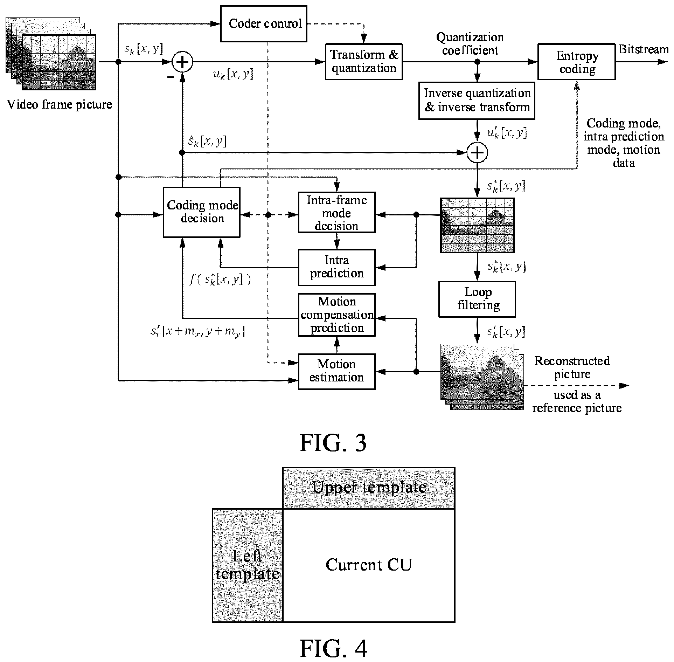

In an embodiment of this application, FIG. 3 is a basic flowchart of a video coder. In this process, intra prediction is used as an example for description. A difference operation is performed on an original picture signal $s, [x, y]$ and a prediction picture signal $\hat{S}_k[x,y]$ to obtain a residual signal $u_k[x,y]$. The residual signal $u_k[x,y]$ is transformed and quantized to obtain a quantization coefficient. On the one side, entropy coding is performed on the quantization coefficient to obtain a coded bitstream. On the other side, inverse quantization and inverse transform are performed to obtain a reconstructed residual signal $u'_k[x,y]$. The predicted picture signal $\hat{S}_k[x,y]$ and the reconstructed residual signal $u'_k[x, y]$ are superimposed to generate a reconstructed picture signal

$$s_k^*[x, y]$$

. On the one side, the reconstructed picture

signal $s_k^*[x, y]$ is input into an intra-frame mode decision module and an intra prediction module for intra prediction processing. On the other side, filtering processing is performed through loop filtering, and a filtered picture signal $s'_k[x, y]$ is output. The filtered picture signal $s'_k[x, y]$ may be used as a reference picture of a next frame for motion estimation and motion compensation prediction. Then, a prediction picture signal $\hat{s}_k[x,y]$ of a next frame is obtained based on a motion compensation prediction result $s'_r[x+m_x, y+ m_y]$ and an intra prediction

result $f(s_k^*[x, y])$ . The foregoing process continues to be repeated until coding is completed.

In the foregoing coding process, loop filtering is one of core modules for video coding, and can effectively remove various coding distortions. The latest international video coding standard VVC supports four different types of loop filters: a deblocking filter (DF for short), sample adaptive offset (SAO for short), adaptive loop filter (ALF for short), and cross-component adaptive loop filter (CC-ALF).

To explore a next-generation compression standard, the Joint Video Experts Team (JVET), has established a latest ECM reference platform and incorporated a TIMD technology. Like a DIMD technology, TIMD may perform a same operation on a template region at the coder side and the decoder side to derive a prediction mode, and reconstruct the CU based on the derived prediction mode. Because TIMD does not need a coding prediction mode, this technology can reduce a size of a bitstream.

The TIMD technology derives an intra-frame angular mode using a reconstructed pixel in an adjacent template region of the current CU. As shown in FIG. 4, there are template regions at the top and the left of a to-be-predicted current CU. A width of the template region is determined by a size of the current CU. If a width of the current CU is greater than 8, a width of the left template region is four pixels; or if a width of the current CU is not greater than 8, a width of the left template region is two pixels. If a height of the current CU is greater than 8, a height of the upper template region is four pixels; or if a height of the current CU is not greater than 8, a height of the upper template region is two pixels.

It is assumed in TIMD that a texture feature of the template region is consistent with that of a current to-be-predicted region. Since a pixel in the template region has been reconstructed, an optimal mode may be selected by traversing a most probable mode (MPM) list, calculating a predicted pixel in the template region, and calculating a sum of absolute transformed difference (SATD) of the predicted pixel and the reconstructed pixel. The mode is used as an intra prediction mode of the to-be-predicted region. At the decoder side, an intra prediction mode may be derived in a same derivation mode, so that coded bits of the mode can be greatly reduced.

Specifically, for the current CU, TIMD derives the intra prediction mode in the MPM list, maps the intra prediction mode into a more elaborate TIMD prediction mode, calculates the SATD of the predicted pixel and the reconstructed pixel in the template region, then selects a prediction mode M1 with a smallest SATD cost (SATD_cost) and a prediction mode M2 with second smallest SATD_cost, and determines whether to perform weighted fusion based on SATD_cost of M1 and M2. In other words, if SATD_cost(M1)<2×SATD_cost(M2), the current CU is predicted with M1 and M2, and weighted fusion is performed on predicted values respectively obtained through prediction in M1 and M2 to obtain a final predicted value of the current CU, where a weight weight1 of M1 is SATD_cost(M1)/(SATD_cost(M2) +SATD_cost(M2)), and a weight weight2 of M2 is SATD_cost(M2)/(SATD_cost(M1)+ SATD_cost(M2)); or if SATD_cost(M1) is not less than 2×SATD_cost(M2), the current CU is predicted in only M1 to obtain a predicted value of the current CU. The TIMD technology may also be used in combination with a plurality of other modes, for example, an intra sub-partition (ISP) mode, a multiple reference line (MRL) mode, a combined inter and intra prediction (CIIP) mode, a combined inter and intra prediction-template matching (CIIP-TM) mode, and a geometric partitioning mode (GPM).

However, in actual coding, the texture feature of the template region cannot completely represent that of the current region. Therefore, the prediction mode derived for the template region is not necessarily suitable for the current CU, which may affect video coding and decoding performance. Therefore, according to the technical solutions in the embodiments of this application, the an addition correction value is used based on the prediction mode obtained through TIMD, so that the current CU is predicted more accurately. Therefore, accuracy and adaptability of TIMD are improved, and video coding and decoding performance is improved.

The following describes in detail implementation details of the technical solutions in the embodiments of this application.

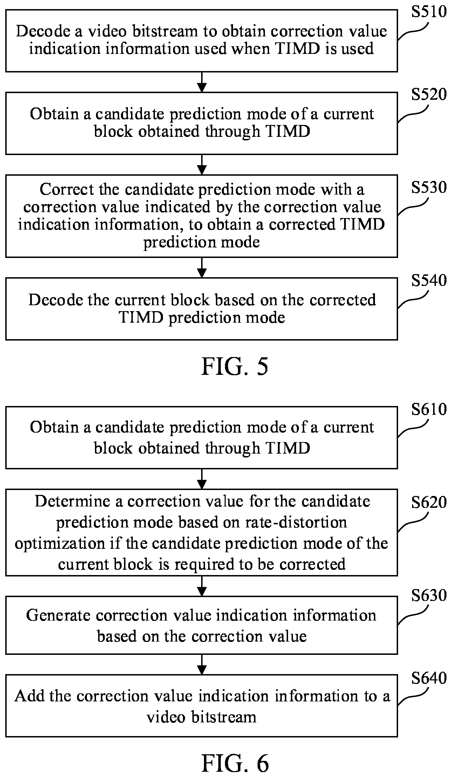

FIG. 5 is a flowchart of a video decoding method according to an embodiment of this application. The video decoding method may be performed by a device with a computational processing capability, for example, may be performed by a terminal device or a server. As shown in FIG. 5, the video decoding method includes at least operations S510 to S540. A detailed description is as follows.

Operation S510: Decode a video bitstream to obtain correction value indication information used when TIMD is used.

In some embodiments, the correction value indication information includes a first flag bit configured for indicating whether to use a correction value to correct a candidate prediction mode of a current block, and a correction value indication flag bit. For example, the first flag bit may be timd_delta_flag. If a value of timd_delta_flag is 1 (merely an example), it indicates that the correction value is required to be used to correct the candidate prediction mode of the current block; or if a value of timd_delta_flag is 0, it indicates that the correction value is not required to be used to correct the candidate prediction mode of the current block.

In some embodiments, when a value of the first flag bit obtained by decoding the video bitstream is configured for indicating to use the correction value to correct the candidate prediction mode of the current block, for example, the value of timd_delta_flag obtained through decoding is 1, the correction value indication flag bit is decoded to obtain the correction value.

In some embodiments, if a value of the first flag bit obtained by decoding the video bitstream is configured for indicating not to use the correction value to correct the candidate prediction mode of the current block, for example, the value of timd_delta_flag obtained through decoding is 0, a decoder side does not need to decode the correction value indication flag bit. In this case, a coder side also does not need to code the correction value indication flag bit in the bitstream.

In some embodiments, the correction value indication flag bit may include a second flag bit and at least one third flag bit. A value of the second flag bit is configured for indicating a sign of the correction value. The at least one third flag bit is configured for indicating an absolute value of the correction value. For example, the second flag bit may be timd_delta_sign. When a value of timd_delta_sign is 1, it indicates that the correction value is positive (or it may indicate that the correction value is negative); or when a value of timd_delta_sign is 0, it indicates that the correction value is negative (or it may indicate that the correction value is positive).

In some embodiments, a value of each third flag bit is configured for indicating whether the absolute value of the correction value is a value of a corresponding level in a specified value set. For example, if the specified value set is {3, 6, 9}, one third flag bit may be timd_delta_first_level. If timd_delta_first_level is 1, it indicates that the absolute value of the correction value is 3; or if timd_delta_first_level is 0, another third flag bit timd_delta_second_level is introduced. If timd_delta_second_level is 1, the absolute value of the correction value is 6; or if timd_delta_second_level is 0, the absolute value of the correction value is 9. In some embodiments, if timd_delta_first_level is 1, the another third flag bit does not need to be decoded because the absolute value of the correction value is known. In this case, the coder side also does not need to code the another third flag bit in the bitstream.

In some embodiments, a value of the at least one third flag bit may be configured to jointly indicate to select a value of a corresponding level from a specified value set as the absolute value of the correction value. For example, if the specified value set is {3, 6, 9}, the at least one third flag bit may be timd_delta_level. If timd_delta_level is 00, it indicates that the absolute value of the correction value is 3; if timd_delta_level is 01, it indicates that the absolute value of the correction value is 6; or if timd_delta_level is 10, it indicates that the absolute value of the correction value is 9.

In some embodiments, the correction value indication flag bit may alternatively include correction value index information. The correction value index information is configured for indicating to select a corresponding value from a specified value set as the correction value. For example, if the specified value set is {-9, -6, -3, 3, 6, 9}, and the correction value index information is timd_delta_index, when timd_delta_index is 000, 001, 010, 011, 100, and 101, it respectively indicates that an index of the correction value is 0, 1, 2, 3, 4, and 5, that is, respectively corresponds to values -9, -6, -3, 3, 6, and 9.

Definitely, in another alternative embodiment, the at least one third flag bit may indicate the absolute value of the correction value in another mode.

For example, a number of the at least one third flag bit may be configured for indicating the absolute value of the correction value. Specifically, if a value of a flag bit other than a last flag bit in the at least one third flag bit is a first value, and a value of the last flag bit in the at least one third flag bit is a second value, the number of the at least one third flag bit may be configured for indicating the absolute value of the correction value. The first value is 0, and the second value is 1. Alternatively, the first value is 1, and the second value is 0.

In some embodiments, the correction value indication information in the foregoing embodiment may be for the current block. In another embodiment of this application, a high-level syntactic element may be introduced to indicate whether the candidate prediction mode is required to be corrected for a plurality of blocks. In this case, a syntactic element of the video bitstream may be decoded to obtain a specified flag bit, and whether the candidate prediction mode of the current block is required to be corrected is determined based on the specified flag bit. In some embodiments, the syntactic element includes at least one of the following: a sequence parameter set (SPS), a picture parameter set (PPS), a flag bit in a picture header, and a flag bit in a slice header.

For example, if a specified flag bit in the SPS indicates that the candidate prediction mode is required to be corrected for a picture sequence, the decoder side does not need to decode the PPS, the flag bit in the picture header, and the flag bit in the slice header, and the coder side also does not need to code the PPS, the flag bit in the picture header, and the flag bit in the slice header.

If a specified flag bit in the SPS indicates that the candidate prediction mode is not required to be corrected for a picture sequence, the decoder side may decode the PPS. If a specified flag bit in the PPS indicates that the candidate prediction mode is required to be corrected for a current picture, the decoder side does not need to decode the flag bit in the picture header and the flag bit in the slice header, and the coder side also does not need to code the flag bit in the picture header and the flag bit in the slice header.

If specified flag bits in the SPS and the PPS indicate that the candidate prediction mode is not required to be corrected for a picture sequence, the decoder side may decode the flag bit in the picture header. If a specified flag bit in the picture header indicates that the candidate prediction mode is required to be corrected for a current picture, the decoder side does not need to decode the flag bit in the slice header, and the coder side also does not need to code the flag bit in the slice header.

Still refer to FIG. 5. Operation S520: Obtain the candidate prediction mode of the current block obtained through TIMD.

In an embodiment of this application, the video bitstream is a bitstream obtained by coding a video picture frame sequence. The video picture frame sequence includes a series of pictures. Each picture may be further partitioned into slices. The slice may be further partitioned into a series of LCUs (or CTUs). The LCU includes a plurality of CUs. A video picture frame is coded in units of blocks. In some new video coding standards, for example, in the H.264 standard, there is a macroblock (MB), and the MB may be further partitioned into a plurality of prediction blocks (prediction) that may be configured for predictive coding. In the HEVC standard, basic concepts such as a CU, a prediction unit (PU), and a transform unit (TU) are used, a plurality of block units are obtained through functional partitioning, and a new tree-based structure is used for description. For example, the CU may be partitioned into smaller CUs based on a quadtree, and the smaller CU may be further partitioned, to form a quadtree structure. In this embodiment of this application, the current block may be a CU, or a block smaller than a CU, for example, a smaller block obtained by partitioning the CU.

In one embodiment, the candidate prediction mode of the current block obtained through TIMD may be selected with the technical solution in the foregoing embodiment. The candidate prediction mode may be a prediction mode with a smallest SATD cost (SATD_cost) and a prediction mode with second smallest SATD_cost.

Operation S530: Correct the candidate prediction mode with the correction value indicated by the correction value indication information, to obtain a corrected TIMD prediction mode.

In some embodiments, in a process of correcting the candidate prediction mode with the correction value indicated by the correction value indication information, the correction value and the candidate prediction mode may be added to obtain the corrected TIMD prediction mode.

In some embodiments, only one candidate prediction mode obtained through TIMD is corrected, or a plurality of candidate prediction modes obtained through TIMD are corrected. If the plurality of candidate prediction modes of the current block obtained through TIMD are corrected, the plurality of candidate prediction modes correspond to different correction value sets respectively, and the correction value is determined from the correction value sets based on the correction value indication information. Definitely, the plurality of candidate prediction modes may alternatively correspond to a same correction value set.

In some embodiments, if the candidate prediction mode required to be corrected is a target prediction mode, a predefined prediction mode corresponding to the correction value may be used as the corrected TIMD prediction mode based on the correction value. In some embodiments, the target prediction mode may be a planar mode, a direct current (DC) mode, or another non-angular prediction mode.

For example, the correction value set may be {-9, -6, -3, 3, 6, 9}. In this case, a predefined prediction mode corresponding to each correction value may be a specific prediction mode in the following set: {DC mode (mode index 0)/planar mode (mode index 1), TIMD horizontal mode (mode index 34), TIMD diagonal mode (mode index 66), TIMD vertical mode (mode index 98), TIMD antidiagonal mode 1 (mode index 130), TIMD antidiagonal mode 2 (mode index 2)}.

In some embodiments, a correction value set corresponding to the candidate prediction mode may be determined based on at least one of the following factors, the correction value being determined from the correction value set based on the correction value indication information: the candidate prediction mode of the current block obtained through TIMD, a size of the current block, an MPM set, a candidate prediction mode obtained through DIMD, and a TIMD cost. In some embodiments, the TIMD cost may be an SATD cost or the like.

In some embodiments, the corrected TIMD prediction mode may be different from at least one of the following prediction modes: a candidate prediction mode obtained through TIMD, a prediction mode in the MPM set, a prediction mode not in the MPM set, the candidate prediction mode obtained through DIMD, and a prediction mode obtained by correcting the candidate prediction mode obtained through DIMD.

In some embodiments, the prediction mode obtained by correcting the candidate prediction mode obtained through DIMD may be obtained through correction in a correction mode similar to that of TIMD, that is, the candidate prediction mode obtained through DIMD is corrected with the correction value indicated in the bitstream.

In an embodiment of this application, if TIMD and another mode are configured for joint decoding, different other modes correspond to the same or different correction value sets.

For example, if the another mode includes an MRL mode, the TIMD candidate prediction mode is corrected for some or all reference lines of the MRL mode. Each reference line of the MRL mode corresponds to a different correction value set. Alternatively, a plurality of reference lines of the MRL mode correspond to a same correction value set.

In some embodiments, if the corrected TIM prediction mode is not in a TIMD angular prediction mode set, the corrected TIMD prediction mode may be adjusted to be in the TIMD angular prediction mode set based on the candidate prediction mode and the correction value.

Specifically, if the correction value is positive, a difference between a sum of the candidate prediction mode and the correction value and a first specified value may be calculated, then a remainder between the difference and a second specified value is calculated, and an adjusted TIMD prediction mode is determined based on the remainder. The first specified value is positive, for example, may be 2. The second specified value is determined based on a maximum value of a TIMD angular prediction mode. For example, the second specified value is offset+3, and offset is the maximum value of the TIMD angular prediction mode minus 5 (the values are merely examples).

If the correction value is negative, a sum of a difference between the candidate prediction mode and the correction value and a third specified value is calculated, a remainder between the sum and a second specified value is calculated, and an adjusted TIMD prediction mode is determined based on the remainder. The third specified value and the second specified value are determined based on a maximum value of a TIMD angular prediction mode. For example, the third specified value is offset+1, the second specified value is offset+3, and offset is the maximum value of the TIMD angular prediction mode minus 5 (the values are merely examples).

Still refer to FIG. 5. Operation S540: Decode the current block based on the corrected TIMD prediction mode.

In an embodiment of this application, when the candidate prediction mode is corrected, a first candidate prediction mode obtained through TIMD is corrected with the correction value indicated by the correction value indication information, to obtain a corrected first prediction mode. In this case, decoding the current block based on the corrected TIMD prediction mode in operation S540 may be using a predicted value obtained for the current block in the corrected first prediction mode as a predicted value of the current block.

Alternatively, decoding the current block based on the corrected TIMD prediction mode in operation S540 may be fusing a predicted value obtained for the current block in the corrected first prediction mode and a predicted value obtained for the current block in a specified prediction mode to obtain a predicted value of the current block.

In some embodiments, the specified prediction mode includes at least one of the following: a non-angular prediction mode (for example, the planar mode), a second candidate prediction mode obtained through TIMD, and a prediction mode obtained by correcting the second candidate prediction mode obtained through TIMD.

In some embodiments, when the second candidate prediction mode is corrected, a same correction method as the first candidate prediction mode may be used. The second candidate prediction mode is corrected with a same correction value as or a different correction value from the first candidate prediction mode.

In an embodiment of this application, a process of fusing the predicted value obtained for the current block in the corrected first prediction mode and the predicted value obtained for the current block in the specified prediction mode to obtain the predicted value of the current block may be performing, based on a specified weight value, weighted summation on the predicted value obtained for the current block in the corrected first prediction mode and the predicted value obtained for the current block in the specified prediction mode, to obtain the predicted value of the current block.

In some embodiments, the specified weight value may be determined based on at least one of the following factors: the candidate prediction mode of the current block obtained through TIMD; the size of the current block; an SATD cost between the first prediction mode before correction and the specified prediction mode before correction; and an SATD cost between the corrected first prediction mode and a corrected specified prediction mode.

For example, if the weight is determined based on the SATD cost between the first prediction mode before correction and the specified prediction mode before correction, a weight weight1 of a corrected first prediction mode M1 is $SATD\_cost(M1)/(SATD\_cost(M3)+SATD\_cost(M3))$, and a weight weight3 of a specified prediction mode M3 is $SATD\_cost(M3)/(SATD\_cost(MI)+SATD\_cost(M3))$. $SATD\_cost(M1)$ represents an SATD cost of the first prediction mode before correction. SATD_cost(M3) represents an SATD cost of the specified prediction mode before correction.

If the weight is determined based on the SATD cost between the corrected first prediction mode and the corrected specified prediction mode, a weight weight1' of a corrected first prediction mode M1 is SATD_cost(M1')/(SATD_cost(M3')+SATD_cost(M3')), and a weight weight3' of a specified prediction mode M3 is SATD_cost(M3')/(SATD_cost(M1')+SATD_cost(M3')). SATD_cost(M1') represents an SATD cost of the corrected first prediction mode. SATD_cost(M3') represents an SATD cost of the corrected specified prediction mode.

FIG. 6 is a flowchart of a video coding method according to an embodiment of this application. The video coding method may be performed by a device with a computational processing capability, for example, may be performed by a terminal device or a server. As shown in FIG. 6, the video coding method includes at least operations S610 to S640. A detailed description is as follows.

Operation S610: Obtain a candidate prediction mode of a current block obtained through TIMD.

Operation S620: Determine a correction value for the candidate prediction mode based on RDO if the candidate prediction mode of the current block is required to be corrected.

Operation S630: Generate correction value indication information based on the correction value.

Operation S640: Add the correction value indication information to a video bitstream.

A processing process on a coder side is similar to that at a decoder side. For example, the candidate prediction mode of the current block obtained through TIMD is similar to that at the decoder side. When the correction value for the candidate prediction mode is determined, a correction value corresponding to minimum RDO may be determined based on the RDO. A process of generating the correction value indication information based on the correction value is similar to a process in which the decoder side decodes a bitstream to obtain correction value indication information, and details are not described again.

It may be learned that according to the technical solution in this embodiment of this application, the correction value is mainly introduced to improve accuracy and adaptability of TIMD, to improve video coding and decoding performance.

In an embodiment of this application, when a prediction mode obtained through TIMD is corrected to some extent, for a specific candidate prediction mode obtained through TIMD (for example, a first candidate prediction mode M1 obtained through TIMD), a value set of a correction value M_delta for the candidate prediction mode may be a predefined value set, for example, M_delta ∈ {-9, -6, -3, 3, 6, 9}, or may be a value set dynamically adjusted in coding and decoding processes. The value set of the correction value may alternatively be defined by high-level syntax, for example, the value of the correction value is specified in an SPS, a PPS, and a slice header. At the coder side, whether to use the correction value and a specific correction value to be used are determined by the RDO, to ensure use of a prediction mode corresponding to the minimum RDO.

In some embodiments, a flag bit timd_delta_flag may be introduced to indicate whether to use the correction value. For example, when timd_delta_flag is 0, it indicates that no correction value is configured for the mode of the current block obtained through TIMD; or when timd_delta_flag is not 0, the correction value is required to be configured for the mode obtained through TIMD.

In an embodiment of this application, when timd_delta_flag is 1, a flag bit timd_delta_sign may be introduced to represent a sign bit of M_delta. When timd_delta_sign is 1, M_delta is positive (or negative); or when timd_delta_sign is 0, M_delta is negative (or positive). In addition, one or more flag bits may be introduced to represent a magnitude of the correction value. M_delta ∈ {-9, -6, -3, 3, 6, 9} is used as an example. When a flag bit timd_delta_first_level is introduced, if timd_delta_first_level is 1, it indicates that an absolute value of M_delta is 3; or if timd_delta_first_level is 0, a flag bit timd_delta_second_level is introduced. If timd_delta_second_level is 1, an absolute value of M_delta is 6; or if timd_delta_second_level is 0, an absolute value of M_delta is 9.

In an embodiment of this application, when timd_delta_flag is 1, a flag bit timd_delta_sign may be introduced to represent a sign bit of M_delta. When timd_delta_sign is 1, M_delta is positive (or negative); or when timd_delta_sign is 0, M_delta is negative (or positive). In addition, one or more flag bits may be introduced to represent a magnitude of the correction value. M_delta ∈ {-9, -6, -3, 3, 6, 9} is used as an example. A flag bit timd_delta_level may be introduced. If timd_delta_level is 00, it indicates that an absolute value of M_delta is 3; if timd_delta_level is 01, an absolute value of M_delta is 6; or if timd_delta_level is 10, an absolute value of M_delta is 9.

In an embodiment of this application, when timd_delta_flag is 1, one or more flag bits may be introduced to represent a correction value index. M_delta ∈ {-9, -6, -3, 3, 6, 9} is used as an example. A flag bit timd_delta_index is introduced. If timd_delta_index is 000, 001, 010, 011, 100, and 101, it indicates that an index of M_delta is 0, 1, 2, 3, 4, and 5 respectively.

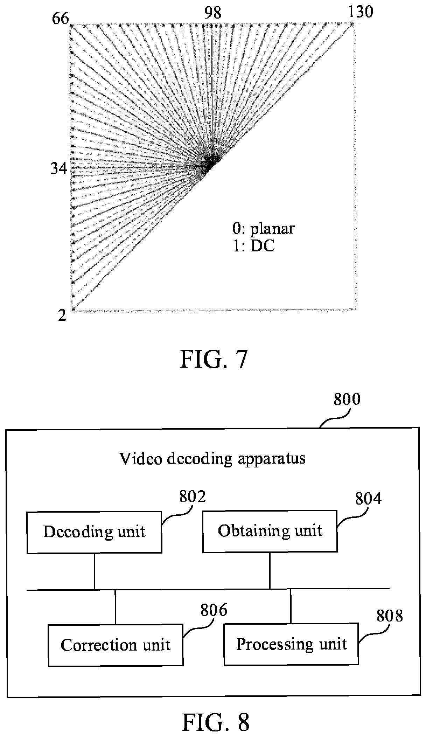

In an embodiment of this application, when a corrected mode obtained by correcting one candidate prediction mode (for example, M1) obtained through TIMD goes beyond a TIMD angular prediction mode set, the corrected mode is mapped into a mode in the TIMD angular prediction mode set. For example, as shown in FIG. 7, in ECM, the TIMD angular prediction mode set is {2, 3, ..., 130}, and a mode 0 and a mode 1 represent a DC mode and a planar mode respectively. In this case, a corrected TIMD mode may be mapped back into a mode in the TIMD angular prediction mode set {2, 3, ..., 130}.

Specifically, when the correction value M_delta is positive, if a corrected TIMD angular prediction mode goes beyond the TIMD angular prediction mode set, the corrected TIMD angular prediction mode is mapped into ((M1-1+(M_delta-1))%mod)+2; or when the correction value M_delta is negative, if a corrected TIMD angular prediction mode goes beyond the TIMD angular prediction mode set, the corrected TIMD angular prediction mode is mapped into ((M1+offset-(M_delta-1))%mod)+2, where % represents a remainder calculation operation, offset is a maximum value of a TIMD angular prediction mode minus 5, and mod is offset+3.

In an embodiment of this application, when one candidate prediction mode (for example, M1) obtained through TIMD is a planar mode, a DC mode, or another non-angular prediction mode, a corrected prediction mode of the candidate prediction mode may be mapped into a special TIMD prediction mode. For example, when M_delta is {-9, -6, -3, 3, 6, 9}, the corrected prediction mode is mapped into a specific prediction mode in the following set: {DC mode (mode index 0)/planar mode (mode index 1), TIMD horizontal mode (mode index 34), TIMD diagonal mode (mode index 66), TIMD vertical mode (mode index 98), TIMD antidiagonal mode 1 (mode index 130), TIMD antidiagonal mode 2 (mode index 2)}.

In an embodiment of this application, correction value sets for different candidate prediction modes obtained through TIMD may be different. For example, correction value sets for a first candidate prediction mode M1 obtained through TIMD and a second candidate prediction mode M2 obtained through TIMD may be different.

In an embodiment of this application, the correction value set is determined by coded or decoded information, including but not limited to the following information: one or more candidate prediction modes obtained through TIMD, a block size, an MPM set, one or more modes obtained through DIMD, a template matching cost (for example, SATD_cost) of TIMD, and the like.

In an embodiment of this application, after corrected with a correction value, a specific candidate prediction mode obtained through TIMD may not include the one or more modes obtained through TIMD.

In an embodiment of this application, after corrected with a correction value, a specific candidate prediction mode obtained through TIMD may not include the mode in the MPM set.

In an embodiment of this application, after corrected with a correction value, a specific candidate prediction mode obtained through TIMD may not include a mode in a non-MPM set.

In an embodiment of this application, after corrected with a correction value, a specific candidate prediction mode obtained through TIMD may not include a prediction mode obtained by correcting a specific (or several or any) mode obtained through DIMD.

In an embodiment of this application, after a specific candidate prediction mode obtained through TIMD (for example, the first candidate prediction mode M1 obtained through TIMD) is corrected, the current block may be predicted in a corrected prediction mode to obtain a predicted value. Then, a final predicted value of the current block may be obtained by a plurality of methods of weighted fusion with a predicted value obtained for the current block in another mode obtained through TIMD (for example, the second candidate prediction mode M2 obtained through TIMD).

In some embodiments, after a specific candidate prediction mode obtained through TIMD (for example, the first candidate prediction mode M1 obtained through TIMD) is corrected, the current block may be predicted in a corrected prediction mode to obtain a predicted value. Then, the predicted value is directly used as a final prediction result.

In some embodiments, after a specific candidate prediction mode obtained through TIMD (for example, the first candidate prediction mode M1 obtained through TIMD) is corrected, the current block may be predicted in a corrected prediction mode to obtain a predicted value. Then, a final prediction result is obtained through weighted fusion with a predicted value obtained for the current block in a non-angular mode, for example, the planar mode.

In some embodiments, after a specific candidate prediction mode obtained through TIMD (for example, the first candidate prediction mode M1 obtained through TIMD) is corrected, the current block may be predicted in a corrected prediction mode to obtain a predicted value. Then, a final prediction result is obtained through weighted fusion with a predicted value obtained for the current block in another candidate prediction mode obtained through TIMD (for example, the second prediction mode M2 obtained through TIMD).

In some embodiments, after a specific candidate prediction mode obtained through TIMD (for example, the first candidate prediction mode M1 obtained through TIMD) is corrected, the current block may be predicted in a corrected prediction mode to obtain a predicted value. Then, another candidate prediction mode obtained through TIMD (for example, the second candidate prediction mode M2 obtained through TIMD) is corrected with the same correction value M_delta. Then, weighted fusion is performed on predicted values obtained for the current block in corrected M1 and M2 to obtain a final prediction result.

In some embodiments, after a specific candidate prediction mode obtained through TIMD (for example, the first candidate prediction mode M1 obtained through TIMD) is corrected, the current block may be predicted in a corrected prediction mode to obtain a predicted value. Then, another candidate prediction mode obtained through TIMD (for example, the second candidate prediction mode M2 obtained through TIMD) is corrected with a different correction value M_delta. Then, weighted fusion is performed on predicted values obtained for the current block in corrected M1 and M2 to obtain a final prediction result.

In some embodiments, flag bit information may be separately transmitted by using the method in the foregoing embodiment during coded transmission of the correction value M_delta configured for the another candidate prediction mode obtained through TIMD (for example, the second candidate prediction mode M2 obtained through TIMD).

In an embodiment of this application, a weight for weighted fusion is determined by coded or decoded information, including but not limited to the following information: the one or more modes obtained through TIMD, the block size, and the like.

In some embodiments, the weight for weighted fusion may be calculated through SATD_cost of the candidate prediction mode before correction, or may be calculated through SATD_cost of the corrected candidate prediction mode.

For example, both the first candidate prediction mode M1 obtained through TIMD and the second candidate prediction mode M2 obtained through TIMD are corrected, then the current block is predicted in the corrected prediction modes M1 and M2 to obtain predicted values, and then weighted fusion is performed on the predicted values obtained for the current block in corrected M1 and M2 to obtain a final prediction result.

In this case, the weight is determined based on an SATD cost between the candidate prediction mode M1 before correction and the candidate prediction mode M2 before correction, that is, a weight weight1 of the corrected candidate prediction mode M1 is SATD_cost(M1)/(SATD_cost(M2)+SATD_cost(M2)), and a weight weight2 of the corrected candidate prediction mode M2 is SATD_cost(M2)/(SATD_cost(M1)+SATD_cost(M2)). SATD_cost(M1) represents an SATD cost of the candidate prediction mode M1 before correction. SATD_cost(M2) represents an SATD cost of the candidate prediction mode M2 before correction.

Alternatively, the weight may be determined based on an SATD cost between the corrected candidate prediction mode M1 and the corrected candidate prediction mode M2, that is, a weight weight1' of the corrected candidate prediction mode M1 is SATD_cost(M1')/(SATD_cost(M2')+SATD_cost(M2')), and a weight weight2' of the corrected candidate prediction mode M2 is SATD_cost(M2')/(SATD_cost(M1')+SATD_cost(M2')). SATD_cost(M1') represents an SATD cost of the corrected candidate prediction mode M1. SATD_cost(M2') represents an SATD cost of the corrected candidate prediction mode M2.

In an embodiment of this application, the correction value for TIMD may be configured for one or more other modes used with TIMD. In some embodiments, when TIMD is used with the other modes, TIMD may design a separate correction value set for each other mode used with TIMC, or may design a same correction value set for a plurality of modes used with TIMD.

Specifically, when TIMD is used with an MRL mode, a separate correction value set may be designed for each reference line of the MRL mode, or a same correction value set may be designed for a plurality of reference lines of the MRL mode.

Alternatively, when TIMD is used with an MRL mode, a correction mode for TIMD may be configured for some or all reference lines of the MRL mode. For example, the correction mode for TIMD is configured for a nearest reference line of the MRL mode.

In an embodiment of this application, one or more flag bits are introduced to a high-level syntactic element (for example, an SPS, a PPS, a picture header, or a slice header). The flag bit is configured for indicating whether to introduce the correction value based on TIMD, DIMD, or TIMD and DIMD. These high-level syntactic elements are combined with a flag bit of the current block in the foregoing embodiment to determine whether the candidate prediction mode of the current block obtained through TIMD or DIMD is required to be corrected.

The following describes an apparatus embodiment of this application, which may be used to perform the method in the foregoing embodiment of this application. For details not disclosed in the apparatus embodiment of this application, refer to the method embodiment of this application.

FIG. 8 is a block diagram of a video decoding apparatus according to an embodiment of this application. The video decoding apparatus may be disposed in a device with a computational processing capability, for example, may be disposed in a terminal device or a server.

As shown in FIG. 8, a video decoding apparatus 800 according to an embodiment of this application includes a decoding unit 802, an obtaining unit 804, a correction unit 806, and a processing unit 808.

The decoding unit 802 is configured to decode a video bitstream to obtain correction value indication information used when TIMD is used. The obtaining unit 804 is configured to obtain a candidate prediction mode of a current block obtained through TIMD. The correction unit 806 is configured to correct the candidate prediction mode with a correction value indicated by the correction value indication information, to obtain a corrected TIMD prediction mode. The processing unit 808 is configured to decode the current block based on the corrected TIMD prediction mode.

In some embodiments of this application, based on the foregoing solution, the correction value indication information includes a first flag bit configured for indicating whether to use the correction value to correct the candidate prediction mode of the current block, and a correction value indication flag bit. The decoding unit 802 is configured to decode the correction value indication flag bit to obtain the correction value if a value of the first flag bit obtained by decoding the video bitstream is configured for indicating to use the correction value to correct the candidate prediction mode of the current block.

In some embodiments of this application, based on the foregoing solution, the correction value indication flag bit includes a second flag bit and at least one third flag bit. A value of the second flag bit is configured for indicating a sign of the correction value. The at least one third flag bit is configured for indicating an absolute value of the correction value.

In some embodiments of this application, based on the foregoing solution, a value of each third flag bit is configured for indicating whether the absolute value of the correction value is a value of a corresponding level in a specified value set.

In some embodiments of this application, based on the foregoing solution, a value of the at least one third flag bit is configured to jointly indicate to select a value of a corresponding level from a specified value set as the absolute value of the correction value.

In some embodiments of this application, based on the foregoing solution, the correction value indication flag bit includes correction value index information. The correction value index information is configured for indicating to select a corresponding value from a specified value set as the correction value.

In some embodiments of this application, based on the foregoing solution, the video decoding apparatus further includes an adjustment unit, configured to adjust, if the corrected TIM prediction mode is not in a TIMD angular prediction mode set, the corrected TIMD prediction mode to be in the TIMD angular prediction mode set based on the candidate prediction mode and the correction value.

In some embodiments of this application, based on the foregoing solution, the adjustment unit is configured to calculate, if the correction value is positive, a difference between a sum of the candidate prediction mode and the correction value and a first specified value, calculate a remainder between the difference and a second specified value, and determine an adjusted TIMD prediction mode based on the remainder. The first specified value is positive. The second specified value is determined based on a maximum value of a TIMD angular prediction mode.

In some embodiments of this application, based on the foregoing solution, the adjustment unit is configured to calculate, if the correction value is negative, a sum of a difference between the candidate prediction mode and the correction value and a third specified value, calculate a remainder between the sum and a second specified value, and determine an adjusted TIMD prediction mode based on the remainder. The third specified value and the second specified value are determined based on a maximum value of a TIMD angular prediction mode.

In some embodiments of this application, based on the foregoing solution, the correction unit 806 is configured to use, based on the correction value if the candidate prediction mode is a target prediction mode, a predefined prediction mode corresponding to the correction value as the corrected TIMD prediction mode.

In some embodiments of this application, based on the foregoing solution, if the candidate prediction mode of the current block obtained through TIMD includes a plurality of candidate prediction modes, the plurality of candidate prediction modes correspond to different correction value sets respectively. The correction value is determined from the correction value sets based on the correction value indication information.

In some embodiments of this application, based on the foregoing solution, a correction value set corresponding to the candidate prediction mode is determined based on at least one of the following factors, the correction value being determined from the correction value set based on the correction value indication information: the candidate prediction mode of the current block obtained through TIMD, a size of the current block, an MPM set, a candidate prediction mode obtained through DIMD, and a TIMD cost.

In some embodiments of this application, based on the foregoing solution, the corrected TIMD prediction mode is different from at least one of the following prediction modes: a candidate prediction mode obtained through TIMD, a prediction mode in the MPM set, a prediction mode not in the MPM set, the candidate prediction mode obtained through DIMD, and a prediction mode obtained by correcting the candidate prediction mode obtained through DIMD.

In some embodiments of this application, based on the foregoing solution, the correction unit 806 is configured to correct, with the correction value indicated by the correction value indication information, a first candidate prediction mode obtained through TIMD, to obtain a corrected first prediction mode.

The processing unit 808 is configured to use a predicted value obtained for the current block in the corrected first prediction mode as a predicted value of the current block, or fuse a predicted value obtained for the current block in the corrected first prediction mode and a predicted value obtained for the current block in a specified prediction mode to obtain a predicted value of the current block.

In some embodiments of this application, based on the foregoing solution, the specified prediction mode includes at least one of the following: a non-angular prediction mode, a second candidate prediction mode obtained through TIMD, and a prediction mode obtained by correcting the second candidate prediction mode obtained through TIMD.

The second candidate prediction mode is corrected with a same correction value as or a different correction value from the first candidate prediction mode.

In some embodiments of this application, based on the foregoing solution, the processing unit 808 is configured to perform, based on a specified weight value, weighted summation on the predicted value obtained for the current block in the corrected first prediction mode and the predicted value obtained for the current block in the specified prediction mode, to obtain the predicted value of the current block.

In some embodiments of this application, based on the foregoing solution, the specified weight value is determined based on at least one of the following factors: the candidate prediction mode of the current block obtained through TIMD; the size of the current block; an SATD cost between the first prediction mode before correction and the specified prediction mode before correction; and an SATD cost between the corrected first prediction mode and a corrected specified prediction mode.

In some embodiments of this application, based on the foregoing solution, if TIMD and another mode are configured for joint decoding, different other modes correspond to the same or different correction value sets. The correction value is determined from the correction value sets based on the correction value indication information.

In some embodiments of this application, based on the foregoing solution, the another mode includes an MRL mode. The correction unit 806 is further configured to correct the TIMD candidate prediction mode for some or all reference lines of the MRL mode. Each reference line of the MRL mode corresponds to a different correction value set. Alternatively, a plurality of reference lines of the MRL mode correspond to a same correction value set.

In some embodiments of this application, based on the foregoing solution, the decoding unit 802 is further configured to decode a syntactic element of the video bitstream to obtain a specified flag bit, and determine, based on the specified flag bit, whether the candidate prediction mode of the current block is required to be corrected. The syntactic element includes at least one of the following: an SPS, a PPS, a flag bit in a picture header, and a flag bit in a slice header.

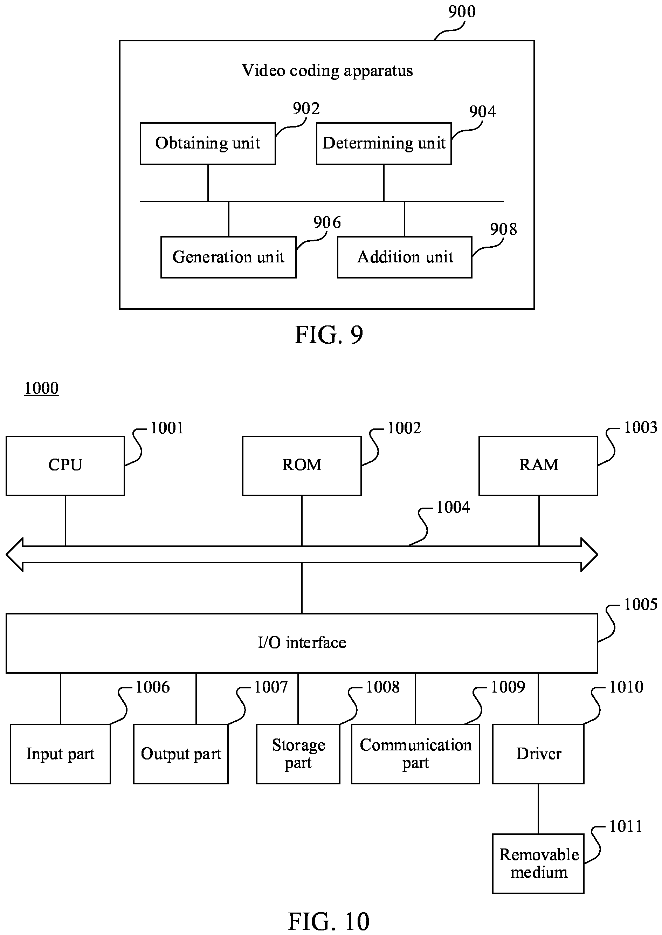

FIG. 9 is a block diagram of a video coding apparatus according to an embodiment of this application. The video coding apparatus may be disposed in a device with a computational processing capability, for example, may be disposed in a terminal device or a server.

As shown in FIG. 9, a video coding apparatus 900 according to an embodiment of this application includes an obtaining unit 902, a determining unit 904, a generation unit 906, and an addition unit 908.

The obtaining unit 902 is configured to obtain a candidate prediction mode of a current block obtained through TIMD. The determining unit 904 is configured to determine a correction value for the candidate prediction mode based on RDO if it is determined that the candidate prediction mode of the current block is required to be corrected. The generation unit 906 is configured to generate correction value indication information based on the correction value. The addition unit 908 is configured to add the correction value indication information to a video bitstream.

FIG. 10 is a schematic diagram of a structure of a computer system of an electronic device suitable for implementing an embodiment of this application.

A computer system 1000 of the electronic device shown in FIG. 10 is merely an example, and shall not impose any limitation on the function and scope of use of the embodiments of this application.

As shown in FIG. 10, the computer system 1000 includes a central processing unit (CPU) 1001 that may perform various suitable actions and processing based on a program stored in a read-only memory (ROM) 1002 or a program loaded from a storage part 1008 into a random access memory (RAM) 1003, for example, perform the method described in the foregoing embodiments. The RAM 1003 further stores various programs and data required for system operations. The CPU 1001, the ROM 1002, and the RAM 1003 are connected to each other through a bus 1004. An input/output (I/O) interface 1005 is also connected to the bus 1004.

The following components are connected to the I/O interface 1005: an input part 1006 including a keyboard and a mouse; an output part 1007 including, for example, a cathode ray tube (CRT), a liquid crystal display (LCD), and a speaker; the storage part 1008 including a hard disk; and a communication part 1009 including, for example, a local area network (LAN) card and a network interface card of a modem and the like. The communication part 1009 performs communication processing through a network such as the Internet. A driver 1010 is also connected to the I/O interface 1005 as required. A removable medium 1011, such as a magnetic disk, an optical disc, a magneto-optical disk, or a semiconductor memory, is installed on the drive 1010 as required, so that a computer program read from the removable medium is installed into the storage part 1008 as required.

In particular, according to an embodiment of this application, the process described above with reference to the flowchart may be implemented as a computer software program. For example, this embodiment of this application includes a computer program product, including a computer program carried on a computer-readable medium, where the computer program includes program code for performing the method shown in the flowchart. In such an embodiment, the computer program may be downloaded from the network through the communication apparatus 1009 and installed, and/or installed from the removable medium 1011. When the computer program is executed by the CPU 1001, various functions defined in the system of this application are performed.

The computer-readable medium in this embodiment of this application may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include but is not limited to: an electrical connection having one or more wires, a portable computer magnetic disk, a hard disk, a RAM, a ROM, an erasable programmable read-only memory (EPROM), a flash memory, an optical fiber, a portable compact disc read-only memory (CD-ROM), an optical storage device, a magnetic storage device, or any suitable combination thereof. In this application, the computer-readable storage medium may be any tangible medium containing or storing a program, and the program may be used by or used in combination with an instruction execution system, an apparatus, or a device. In this application, the computer-readable signal medium may include a data signal transmitted in a baseband or as part of a carrier, and stores a computer-readable computer program. Such a propagated signal may be in a variety of forms, including but not limited to, an electromagnetic signal, an optical signal, or any suitable combination thereof. The computer-readable signal medium may also be any computer-readable medium except for the computer-readable storage medium, and that computer-readable medium may send, propagate, or transmit a program for use by or in combination with an instruction execution system, apparatus, or device. The computer program contained in the computer-readable medium may be transmitted by any suitable medium, including but not limited to: a wireless medium, a wired medium, and the like, or any suitable combination thereof.

The flowcharts and block diagrams in the accompanying drawings illustrate possible system architectures, functions and operations that may be implemented by a system, a method, and a computer program product according to various embodiments of this application. Each block in a flowchart or a block diagram may represent a module, a program segment, or a part of code. The module, the program segment, or the part of code includes one or more executable instructions configured to implement specified logic functions. In some implementations used as substitutes, functions annotated in blocks may alternatively occur in a sequence different from that annotated in an accompanying drawing. For example, two blocks shown in succession may actually be executed substantially in parallel, or may sometimes be executed in a reverse order, depending on a function involved. Each block in the block diagram and/or the flowchart, and a combination of the blocks in the block diagram and/or the flowchart may be implemented by a dedicated hardware-based system that executes specified functions or operations, or may be implemented by a combination of dedicated hardware and a computer program.

A related unit described in the embodiments of this application may be implemented in a software manner, or may be implemented in a hardware manner, and the unit described can also be set in a processor. Names of the units do not constitute a limitation on the units in a specific case.

In another aspect, this application further provides a computer-readable medium. The computer-readable medium may be included in the electronic device described in the foregoing embodiment. Alternatively, the computer-readable medium may exist independently, without being assembled into the electronic device. The computer-readable medium carries one or more computer programs. The one or more programs, when executed by the electronic device, cause the electronic device to perform the method in the foregoing embodiment.

In another aspect, this application further provides a computer program product or computer program. The computer program product or computer program includes computer instructions. The computer instructions are stored in a computer-readable storage medium. In this case, a processor reads the computer instructions from the computer-readable storage medium, and executes the computer instructions to implement the coding method or decoding method provided in various foregoing implementations.

In another aspect, this application further provides a bitstream. The bitstream may be a bitstream decoded by a decoding method provided in this application or a bitstream generated by a coding method provided in this application.

In another aspect, this application further provides a coding and decoding system, including a coder and a decoder described above.

Although a plurality of modules or units of a device configured to perform actions are described in the foregoing detailed description, such division is not mandatory. Actually, according to the implementations of this application, features and functions of two or more modules or units described above may be specifically implemented in one module or unit. On the contrary, features and functions of one module or unit described above may be further divided to be specifically implemented by a plurality of modules or units.

According to the foregoing descriptions of the implementations, a person skilled in the art may readily understand that the exemplary implementations described herein may be implemented by software, or may be implemented by combining software and necessary hardware. Therefore, the technical solutions of the embodiments of this application may be implemented in a form of a software product. The software product may be stored in a non-volatile storage medium (which may be a CD-ROM, a USB flash drive, a removable hard disk, or the like) or on a network, including several instructions for instructing a computing device (which may be a personal computer, a server, a touch terminal, a network device, or the like) to perform methods according to the implementations of this application.

After considering the specification and practicing the implementations disclosed herein, a person skilled in the art may easily conceive of other implementations of this application. This application is intended to cover any variations, uses, or adaptive changes of this application. These variations, uses, or adaptive changes follow the general principles of this application and include common general knowledge or common technical means in the art, which are not disclosed in this application.

This application is not limited to the precise structures described above and shown in the accompanying drawings, and various modifications and changes may be made without departing from the scope of this application. The scope of this application is subject only to the appended claims.

## Claims

1. A video decoding method, comprising:

   decoding a video bitstream to obtain correction value indication information used when template based intra mode derivation (TIMD) is used;
   obtaining a candidate prediction mode of a current block obtained through TIMD;
   correcting the candidate prediction mode with a correction value indicated by the correction value indication information, to obtain a corrected TIMD prediction mode; and
   decoding the current block based on the corrected TIMD prediction mode.

2. The video decoding method according to claim 1, wherein the correction value indication information comprises a first flag bit configured for indicating whether to use the correction value to correct the candidate prediction mode of the current block, and a correction value indication flag bit; and
   the decoding a video bitstream to obtain correction value indication information used when TIMD is used comprises:
   decoding the correction value indication flag bit to obtain the correction value if a value of the first flag bit obtained by decoding the video bitstream is configured for indicating to use the correction value to correct the candidate prediction mode of the current block.

3. The video decoding method according to claim 2, wherein the correction value indication flag bit comprises a second flag bit and at least one third flag bit; and
   a value of the second flag bit is configured for indicating a sign of the correction value, and the at least one third flag bit is configured for indicating an absolute value of the correction value.

4. The video decoding method according to claim 3, wherein a value of each third flag bit is configured for indicating whether the absolute value of the correction value is a value of a corresponding level in a specified value set.

5. The video decoding method according to claim 3, wherein a value of the at least one third flag bit is configured to jointly indicate to select a value of a corresponding level from a specified value set as the absolute value of the correction value.

6. The video decoding method according to claim 2, wherein the correction value indication flag bit comprises correction value index information, and the correction value index information is configured for indicating to select a corresponding value from a specified value set as the correction value.

7. The video decoding method according to any one of claims 1 to 6, wherein the video decoding method further comprises:
   adjusting, if the corrected TIM prediction mode is not in a TIMD angular prediction mode set, the corrected TIMD prediction mode to be in the TIMD angular prediction mode set based on the candidate prediction mode and the correction value.

8. The video decoding method according to claim 7, wherein the adjusting the corrected TIMD prediction mode to be in the TIMD angular prediction mode set based on the candidate prediction mode and the correction value comprises:
   calculating, if the correction value is positive, a difference between a sum of the candidate prediction mode and the correction value and a first specified value, calculating a remainder between the difference and a second specified value, and determining an adjusted TIMD prediction mode based on the remainder, the first specified value being positive, and the second specified value being determined based on a maximum value of a TIMD angular prediction mode.

9. The video decoding method according to claim 7 or 8, wherein the adjusting the corrected TIMD prediction mode to be in the TIMD angular prediction mode set based on the candidate prediction mode and the correction value comprises:
   calculating, if the correction value is negative, a sum of a difference between the candidate prediction mode and the correction value and a third specified value, calculating a remainder between the sum and a second specified value, and determining an adjusted TIMD prediction mode based on the remainder, the third specified value and the second specified value being determined based on a maximum value of a TIMD angular prediction mode.

10. The video decoding method according to any one of claims 1 to 9, wherein the correcting the candidate prediction mode with a correction value indicated by the correction value indication information, to obtain a corrected TIMD prediction mode comprises:
using, based on the correction value if the candidate prediction mode is a target prediction mode, a predefined prediction mode corresponding to the correction value as the corrected TIMD prediction mode.

11. The video decoding method according to any one of claims 1 to 10, wherein if the candidate prediction mode of the current block obtained through TIMD comprises a plurality of candidate prediction modes, the plurality of candidate prediction modes correspond to different correction value sets respectively, and the correction value is determined from the correction value sets based on the correction value indication information.

12. The video decoding method according to any one of claims 1 to 11, wherein the video decoding method further comprises:
determining a correction value set corresponding to the candidate prediction mode based on at least one of the following factors, the correction value being determined from the correction value set based on the correction value indication information:
the candidate prediction mode of the current block obtained through TIMD, a size of the current block, a most probable mode (MPM) set, a candidate prediction mode obtained through decoder-side intra mode derivation (DIMD), and a TIMD cost.

13. The video decoding method according to any one of claims 1 to 12, wherein the corrected TIMD prediction mode is different from at least one of the following prediction modes:
a candidate prediction mode obtained through TIMD, a prediction mode in the MPM set, a prediction mode not in the MPM set, the candidate prediction mode obtained through DIMD, and a prediction mode obtained by correcting the candidate prediction mode obtained through DIMD.

14. The video decoding method according to any one of claims 1 to 13, wherein the correcting the candidate prediction mode with a correction value indicated by the correction value indication information, to obtain a corrected TIMD prediction mode comprises:

correcting, with the correction value indicated by the correction value indication information, a first candidate prediction mode obtained through TIMD to obtain a corrected first prediction mode; and
the decoding the current block based on the corrected TIMD prediction mode comprises:
using a predicted value obtained for the current block in the corrected first prediction mode as a predicted value of the current block, or fusing a predicted value obtained for the current block in the corrected first prediction mode and a predicted value obtained for the current block in a specified prediction mode to obtain a predicted value of the current block.

15. The video decoding method according to claim 14, wherein the specified prediction mode comprises at least one of the following:

a non-angular prediction mode, a second candidate prediction mode obtained through TIMD, and a prediction mode obtained by correcting the second candidate prediction mode obtained through TIMD; and
the second candidate prediction mode is corrected with a same correction value as or a different correction value from the first candidate prediction mode.

16. The video decoding method according to claim 14, wherein the fusing a predicted value obtained for the current block in the corrected first prediction mode and a predicted value obtained for the current block in a specified prediction mode to obtain a predicted value of the current block comprises:
performing, based on a specified weight value, weighted summation on the predicted value obtained for the current block in the corrected first prediction mode and the predicted value obtained for the current block in the specified prediction mode, to obtain the predicted value of the current block.

17. The video decoding method according to claim 16, wherein the video decoding method further comprises:
determining the specified weight value based on at least one of the following factors:

the candidate prediction mode of the current block obtained through TIMD;
the size of the current block;
a sum of absolute transformed difference (SATD) cost between the first prediction mode before correction and the specified prediction mode before correction; and
an SATD cost between the corrected first prediction mode and a corrected specified prediction mode.

18. The video decoding method according to any one of claims 1 to 17, wherein if TIMD and another mode are configured for joint decoding, different other modes correspond to the same or different correction value sets, and the correction value is determined from the correction value sets based on the correction value indication information.

19. The video decoding method according to claim 18, wherein the another mode comprises a multiple reference line (MRL) mode, and the video decoding method further comprises:

correcting the TIMD candidate prediction mode for some or all reference lines of the MRL mode, each reference line of the MRL mode corresponding to a different correction value set, or a plurality of reference lines of the MRL mode corresponding to a same correction value set.

20. The video decoding method according to any one of claims 1 to 19, wherein the video decoding method further comprises:

decoding a syntactic element of the video bitstream to obtain a specified flag bit, and determining, based on the specified flag bit, whether the candidate prediction mode of the current block is required to be corrected, the syntactic element comprising at least one of the following: a sequence parameter set (SPS), a picture parameter set (PPS), a flag bit in a picture header, and a flag bit in a slice header.

21. A video coding method, comprising:

obtaining a candidate prediction mode of a current block obtained through template based intra mode derivation (TIMD); determining a correction value for the candidate prediction mode based on rate-distortion optimization if the candidate prediction mode of the current block is required to be corrected; generating correction value indication information based on the correction value; and adding the correction value indication information to a video bitstream.

22. A video decoding apparatus, comprising:

a decoding unit, configured to decode a video bitstream to obtain correction value indication information used when template based intra mode derivation (TIMD) is used; an obtaining unit, configured to obtain a candidate prediction mode of a current block obtained through TIMD; a correction unit, configured to correct the candidate prediction mode with a correction value indicated by the correction value indication information, to obtain a corrected TIMD prediction mode; and

a processing unit, configured to decode the current block based on the corrected TIMD prediction mode.

23. A video coding apparatus, comprising:

an obtaining unit, configured to obtain a candidate prediction mode of a current block obtained through template based intra mode derivation (TIMD); a determining unit, configured to determine a correction value for the candidate prediction mode based on rate-distortion optimization if it is determined that the candidate prediction mode of the current block is required to be corrected; a generation unit, configured to generate correction value indication information based on the correction value; and an addition unit, configured to add the correction value indication information to a video bitstream.

24. A computer-readable medium having stored therein a computer program, the computer program, when executed by a processor, implementing the video decoding method according to any one of claims 1 to 20, or implementing the video coding method according to claim 21.

25. An electronic device, comprising:

one or more processors; and a memory, configured to store one or more computer programs, the one or more computer programs, when executed by the one or more processors, causing the electronic device to implement the video decoding method according to any one of claims 1 to 20, or implement the video coding method according to claim 21.

26. A computer program product, comprising a computer program, the computer program being stored in a computer-readable storage medium, and a processor of an electronic device reading, from the computer-readable storage medium, the computer program, and executing the computer program, to cause the electronic device to perform the video decoding method according to any one of claims 1 to 20, or implement the video coding method according to claim 21.

27. A bitstream, the bitstream being a bitstream decoded by using the method according to any one of claims 1 to 20, or the bitstream being a bitstream generated by using the method according to claim 21.

FIG. 1

FIG. 2

FIG. 3

| | Upper template |
|---|---|
| Left template | Current CU |

FIG. 4

Decode a video bitstream to obtain correction value
indication information used when TIMD is used

S510

Obtain a candidate prediction mode of a current
block obtained through TIMD

S520

Correct the candidate prediction mode with a
correction value indicated by the correction value
indication information, to obtain a corrected TIMD
prediction mode

S530

Decode the current block based on the corrected
TIMD prediction mode

S540

FIG. 5

Obtain a candidate prediction mode of a current
block obtained through TIMD

S610

Determine a correction value for the candidate
prediction mode based on rate-distortion
optimization if the candidate prediction mode of the
current block is required to be corrected

S620

Generate correction value indication information
based on the correction value

S630

Add the correction value indication information to a
video bitstream

S640

FIG. 6

66    98    130

0: planar
1: DC

34

2

FIG. 7

800

Video decoding apparatus

802                    804

Decoding unit          Obtaining unit

806                    808

Correction unit        Processing unit

FIG. 8

900

Video coding apparatus

902

Obtaining unit

904

Determining unit

906

Generation unit

908

Addition unit

FIG. 9

1000

1001

CPU

1002

ROM

1003

RAM

1004

1005

I/O interface

1006

Input part

1007

Output part

1008

Storage part

1009

Communication part

1010

Driver

1011

Removable medium

FIG. 10

## INTERNATIONAL SEARCH REPORT

| International application No. |
|---|
| **PCT/CN2023/096359** |

### A. CLASSIFICATION OF SUBJECT MATTER

H04N 19/11(2014.01)i; H04N 19/105(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, WPABSC, ENTXT, CNKI, JVET: 编码, 解码, 模板, 相邻, 帧内, 模式, 角度, 方向, 索引, 纹理, 梯度, 推导, 导出, 指示, 标志, 修正, 改进, 细化, 优化, 补偿, encode, decode, template, adjacent, intra, mode, angular, direction, index, texture, gradient, derivate, indication, flag, correct, improvement, refine, optimize, compensation, TIMD, DIMD

### C. DOCUMENTS CONSIDERED TO BE RELEVANT

| Category* | Citation of document, with indication, where appropriate, of the relevant passages | Relevant to claim No. |
|---|---|---|
| X | US 2018324418 A1 (LG ELECTRONICS INC.) 08 November 2018 (2018-11-08) description, paragraphs [0124]-[0182], [0231] and [0260]-[0262] | 1, 12, 20-26 |
| A | CN 112385227 A (HUAWEI TECHNOLOGIES CO., LTD.) 19 February 2021 (2021-02-19) entire document | 1-26 |
| A | WO 2022186616 A1 (HYUNDAI MOTOR CO., LTD. et al.) 09 September 2022 (2022-09-09) entire document | 1-26 |
| A | WANG, Yang et al. "EE2-related: Template-based Intra Mode Derivation Using MPMs" *Joint Video Experts Team (JVET) of ITU-T SG 16 WP 3 and ISO/IEC JTC 1/SC 29 22nd Meeting, by Teleconference, 20-28 April 2021 JVET-V0098-v2*, 22 April 2021 (2021-04-22), entire document | 1-26 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 August 2023** | **18 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

EP 4 507 296 A1

**INTERNATIONAL SEARCH REPORT**

| International application No. |
|---|
| **PCT/CN2023/096359** |

| Box No. II    Observations where certain claims were found unsearchable (Continuation of item 2 of first sheet) |
|---|

This international search report has not been established in respect of certain claims under Article 17(2)(a) for the following reasons:

1. ☑ Claims Nos.: **27**
because they relate to subject matter not required to be searched by this Authority, namely:

Claim 27 sets forth a code stream, which belongs to mere presentations of information. According to PCT Rule 39.1, no international search is performed on said claim.

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

Form PCT/ISA/210 (continuation of first sheet) (July 2022)

26

INTERNATIONAL SEARCH REPORT
Information on patent family members

International application No.

**PCT/CN2023/096359**

| Patent document cited in search report | | | Publication date (day/month/year) | Patent family member(s) | | | Publication date (day/month/year) |
|---|---|---|---|---|---|---|---|
| US | 2018324418 | A1 | 08 November 2018 | WO | 2017065532 | A1 | 20 April 2017 |
| | | | | KR | 20180064414 | A | 14 June 2018 |
| | | | | US | 10587873 | B2 | 10 March 2020 |
| CN | 112385227 | A | 19 February 2021 | CA | 3106487 | A1 | 05 March 2020 |
| | | | | AU | 2023202684 | A1 | 18 May 2023 |
| | | | | JP | 2021535679 | A | 16 December 2021 |
| | | | | WO | 2020042916 | A1 | 05 March 2020 |
| | | | | BR | 112021003679 | A2 | 18 May 2021 |
| | | | | AU | 2023202685 | A1 | 18 May 2023 |
| | | | | AU | 2019330406 | A1 | 04 February 2021 |
| | | | | AU | 2019330406 | B2 | 02 February 2023 |
| | | | | EP | 3815372 | A4 | 05 May 2021 |
| | | | | KR | 20210027486 | A | 10 March 2021 |
| | | | | CL | 2021000492 | A1 | 02 July 2021 |
| | | | | US | 2020382768 | A1 | 03 December 2020 |
| | | | | US | 11044469 | B2 | 22 June 2021 |
| WO | 2022186616 | A1 | 09 September 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211296332X